# FASCICULE DE BREVET EUROPEEN

(11) **EP 3 277 420 B1**
(45) Date de publication et mention de la délivrance du brevet: **18.12.2019**
(21) Numéro de dépôt: 16714853.5
(22) Date de dépôt: 01.04.2016
(51) Int. Cl.: B01J 13/02, C08J 3/00, C08L 79/08, C03C 25/10, C08J 3/07, B29C 70/06, C08J 5/10, C09D 5/00

(54) **DISPERSION AQUEUSE DE PARTICULES D'AU MOINS UN POLYMÈRE THERMOPLASTIQUE, SON PROCÉDÉ DE PRÉPARATION ET SES APPLICATIONS, NOTAMMENT POUR L'ENSIMAGE DE FIBRES DE RENFORT**
WÄSSRIGE DISPERSION VON PARTIKELN AUS MINDESTENS EINEM THERMOPLASTISCHEN POLYMER, VERFAHREN ZUR HERSTELLUNG DAVON UND ANWENDUNGEN DAVON, INSBESONDERE ZUM SCHLICHTEN VON VERSTÄRKUNGSFASERN
AQUEOUS DISPERSION OF PARTICLES OF AT LEAST ONE THERMOPLASTIC POLYMER, PROCESS FOR PREPARING IT AND APPLICATIONS THEREOF, ESPECIALLY FOR SIZING REINFORCING FIBRES

(30) Priorité: 03.04.2015 FR 1552921
(43) Date de publication de la demande: 07.02.2018
(73) Titulaire: ArianeGroup SAS, 75015 Paris (FR); Centre National de la Recherche Scientifique, 75794 Paris Cedex 16 (FR)
(72) Inventeur: DEFOORT, Brigitte, 33160 Saint Medard en Jalles (FR); MALHO RODRIGUES, Aurélie, 31000 Toulouse (FR); FRANCESCHI, Sophie, 31320 Pechbusque (FR); PEREZ, Emile, 31770 Colomiers (FR)
(74) Mandataire: Brevalex
(86) Numéro de dépôt international: PCT/EP2016/057260
(87) Numéro de publication internationale: WO 2016/156589

(56) Documents cités:
- ISABELLE GIRAUD ET AL: "Preparation of aqueous dispersion of thermoplastic sizing agent for carbon fiber by emulsion/solvent evaporation", APPLIED SURFACE SCIENCE, vol. 266, 17 décembre 2012 (2012-12-17), pages 94-99, XP055244813, AMSTERDAM, NL ISSN: 0169-4332, DOI: 10.1016/j.apsusc.2012.11.098
- DATABASE WPI Week 201318 28 février 2013 (2013-02-28) Thomson Scientific, London, GB; AN 2013-C67452 XP002758012, -& JP 2013 040374 A (ZH KAWAMURA RIKAGAKU KENKYUSHO) 28 février 2013 (2013-02-28)
- ROBERTA K RODRIGUES ET AL: "Thermal-stability of mixed giant micelles of alkyltrimethylammonium surfactants and salicylate", JOURNAL OF COLLOID AND INTERFACE SCIENCE, ACADEMIC PRESS, NEW YORK, NY, US, vol. 364, no. 2, 22 août 2011 (2011-08-22) , pages 407-412, XP028318192, ISSN: 0021-9797, DOI: 10.1016/J.JCIS.2011.08.048 [extrait le 2011-08-28]
- Jacques L Zakin, et al.: "Drag reduction by surfactant giant micelles" In: Zana: "Giant Micelles: Properties and Applications", 30 mai 2007 (2007-05-30), CRC Press, XP055245171, vol. 16, pages 473-492, Page 482; Fig 16.5.
- Ramanathan Nagarajan: "Molecular Thermodynamics of Giant Micelles" In: Zana: "Giant Micelles: Properties and Applications", 30 mai 2007 (2007-05-30), CRC Press, XP055245168, pages 1-40, pages 18-19 Fig 1.3

## Description

### DOMAINE TECHNIQUE

L'invention se rapporte au domaine du revêtement de substrats par des films de polymères thermoplastiques.

Plus précisément, l'invention se rapporte à une dispersion aqueuse de particules d'au moins un polymère thermoplastique qui présente, entre autres avantages, ceux de présenter des propriétés rhéologiques telles qu'elle est visqueuse au repos mais fluide sous cisaillement - ce qui a, notamment, pour conséquence qu'elle est stable pendant plusieurs heures en l'absence d'agitation et aisément redispersable après déstabilisation - et de conduire, après dépôt sur un substrat et évaporation de l'eau qu'elle contient, à la formation sur ce substrat d'un film thermoplastique homogène.

Au surplus, cette dispersion aqueuse peut être préparée par un procédé qui est simple à mettre en oeuvre et qui ne nécessite pas d'utiliser d'additifs de haute masse moléculaire, c'est-à-dire, en pratique, de masse moléculaire supérieure à 1 000 g/mol.

L'invention se rapporte donc également à ce procédé de préparation.

L'invention peut trouver des applications dans tous les domaines où l'on peut souhaiter revêtir un substrat d'un film thermoplastique, par exemple pour protéger ce substrat contre la corrosion, l'abrasion ou autre, pour modifier ses propriétés de surface (mouillabilité, résistance, adsorption, adhésion, compatibilité vis-à-vis d'un autre matériau, etc.), pour en améliorer l'aspect ou lui donner une finition particulière, voire pour le décorer.

Toutefois, elle trouve un intérêt tout particulier dans le domaine de l'ensimage de fibres de renfort destinées à entrer dans la constitution de pièces en matériaux composites à matrice thermoplastique et, notamment, de pièces de structure pour les industries aéronautique et spatiale.

Aussi, l'invention se rapporte-t-elle également à l'utilisation de ladite dispersion aqueuse pour revêtir au moins un substrat d'un film thermoplastique et, en particulier, pour ensimer des fibres de renfort pour matériaux composites à matrice thermoplastique.

### ÉTAT DE LA TECHNIQUE ANTÉRIEURE

Les matériaux composites sont des matériaux hétérogènes qui permettent d'exploiter les propriétés mécaniques exceptionnelles de matériaux que l'on ne sait pas fabriquer sous une forme massive mais seulement sous la forme de fibres en les noyant dans une matrice polymère qui permet de lier les fibres entre elles, d'assurer une répartition des contraintes dans les matériaux composites et de protéger les fibres contre les agressions chimiques.

Une condition indispensable à l'obtention d'un matériau composite à hautes performances est que la liaison entre les fibres de renfort et la matrice polymère qui le constituent soit bonne. En effet, si la liaison fibres de renfort/matrice est insuffisante, alors on obtient un matériau composite aux propriétés mécaniques transverses (comme la résistance au cisaillement) médiocres et, donc, aux possibilités d'utilisation très limitées, les pièces en matériaux composites étant, en effet, le plus souvent destinées à travailler en état de contrainte tridirectionnelle.

Les fibres qui sont classiquement utilisées comme matériau de renfort, telles que les fibres de carbone, présentent naturellement une faible adhésion vis-à-vis des matrices polymères.

Aussi, les fabricants de fibres de renfort ont-ils cherché à adapter leurs fibres aux polymères susceptibles d'être utilisés comme matrices par les fabricants de pièces en matériaux composites.

Cette adaptation a été réalisée de deux façons différentes et complémentaires :
* d'une part, par des traitements de surface qui visent tous à créer à la surface des fibres des groupes fonctionnels aptes à réagir avec des fonctions chimiques présentées par le ou les polymères de la matrice ; il s'agit principalement de traitements d'oxydation chimique ou électrolytique mais d'autres types de traitement ont également été proposés comme des traitements thermiques par plasma, des traitements électrolytiques en milieu acide ou basique et des traitements d'implantation d'atomes de type Si ou B ; et
* d'autre part, par l'utilisation d'ensimages spécifiques, c'est-à-dire par le dépôt sur la surface des fibres d'un film d'un matériau dont le rôle est d'augmenter la compatibilité entre les fibres et le ou les polymères de la matrice, de faciliter l'imprégnation des fibres par ce ou ces polymères et d'assurer un « *accrochage* » entre les fibres et ledit ou lesdits polymères.

Il est à noter que des ensimages sont également appliqués sur les fibres de renfort dans d'autres buts que celui d'améliorer leur liaison avec une matrice polymère comme, par exemple, celui de faciliter leur manipulation, de les lubrifier et de les protéger de l'abrasion qu'elles peuvent subir en étant frottées les unes contre les autres.

Pour être en mesure d'améliorer la compatibilité entre des fibres de renfort et une matrice polymère, un ensimage doit, lui-même, être compatible avec cette matrice, c'est-à-dire être de même nature chimique qu'elle.

Étant donné qu'actuellement, on utilise essentiellement des résines thermodurcissables du type résines époxydes ou époxyvinylesters pour réaliser les matrices des matériaux composites, les ensimages proposés à ce jour sont pour la plupart à base d'un polymère époxydé.

Par contre, il existe très peu d'ensimages destinés à des matrices constituées d'un ou de polymères thermoplastiques.

Or, l'utilisation de polymères thermoplastiques, et en particulier de polymères thermoplastiques dits « thermostables » (en raison de ce qu'ils conservent leurs propriétés mécaniques à une température d'utilisation en continu supérieure à 150°C) pour la réalisation de matrices présente potentiellement un grand intérêt, notamment pour les industries aéronautique et spatiale, parce que, d'une part, ils permettent d'envisager une amélioration de la résistance chimique, de la résistance aux chocs et du comportement en vieillissement des matériaux composites, et, d'autre part, les matériaux composites à matrice thermodurcissable ne sont pas recyclables.

Il est donc souhaitable de disposer d'ensimages qui soient adaptés à l'utilisation de matrices thermoplastiques et qui soient donc, eux-mêmes, à base d'un ou plusieurs polymères thermoplastiques.

L'ensimage de fibres de renfort est généralement réalisé par immersion au défilé de ces fibres dans un bain où se trouve une formulation d'ensimage, puis séchage des fibres au sortir de ce bain.

Pour des raisons de sécurité, de santé publique mais également de protection environnementale (respect du Règlement (CE) n° 1907/2006 du Parlement Européen et du Conseil dit « REACH »), on cherche de plus en plus à ce que les bains d'ensimage soient aqueux et non pas organiques.

Or, il se trouve que les polymères thermoplastiques et, notamment, les polymères thermoplastiques thermostables sont typiquement insolubles dans l'eau.

Les bains d'ensimage à base de tels polymères thermoplastiques ne peuvent donc, *a priori,* que se présenter sous la forme de dispersions aqueuses dans lesquelles ces polymères sont présents sous la forme de particules.

Pour pouvoir être utilisées comme bains d'ensimage à une échelle industrielle et conduire à un ensimage de bonne qualité, il est souhaitable que ces dispersions aqueuses satisfassent à un certain nombre d'exigences.

Notamment, il conviendrait qu'elles aient une stabilité en l'absence d'agitation compatible de leur utilisation (quelques heures suffisent) tout en étant aisément redispersables après déstabilisation.

Il conviendrait également que ces dispersions aqueuses soient suffisamment fluides pour s'étaler facilement sur la surface des fibres lorsque celles-ci sont immergées dans le bain d'ensimage mais qu'en dépit de cette fluidité, les fibres ne gouttent pas une fois sorties du bain d'ensimage.

Il conviendrait encore que les particules du ou des polymères présents dans ces dispersions aqueuses, outre d'être en quantité suffisante (généralement, il est souhaitable que le ou les polymères soient présents à hauteur de 0,1% à 1% massique par rapport à la masse des fibres), aient une taille la plus faible possible et, en tout état de cause, inférieure à 1 µm pour que ces particules puissent pénétrer et s'insinuer entre les filaments élémentaires dont sont formées les fibres de renfort et former ainsi par coalescence un film thermoplastique homogène sur la surface des fibres ou des filaments élémentaires après évaporation de l'eau.

Il conviendrait en outre que ces dispersions aqueuses aient ces propriétés tout en comprenant le moins d'additifs possible et, surtout, tout en étant exemptes d'additifs de haute masse moléculaire tels que les agents viscosants (alginates, pectines, carboxyméthylcellulose, etc.) qui sont classiquement utilisés pour stabiliser des dispersions aqueuses de particules. En effet, il est souhaitable qu'au sortir du bain d'ensimage, il ne reste sur la surface des fibres aucun composé susceptible de se dégrader lors de la mise en oeuvre ultérieure des fibres ensimées pour faire des pièces en matériaux composites et, par la même, de perturber cette mise en oeuvre, ce qui est possible si le bain d'ensimage ne comprend que des additifs de faible masse moléculaire, facilement éliminables par calcination lors de la phase de séchage des fibres qui suit leur passage dans le bain d'ensimage.

Il conviendrait enfin qu'elles puissent être obtenues par un procédé compatible, tant au niveau de sa mise en oeuvre que de son coût, avec une exploitation à une échelle industrielle.

Parmi les travaux ayant porté sur la mise au point de dispersions aqueuses de particules d'un polymère thermoplastique pour l'ensimage de fibres de renfort, on peut citer les travaux de Broyles et *al.* relatifs à un ensimage à base d'une poudre d'un phénoxy polyhydroxyéther simplement dispersée dans l'eau (Polymer 1998, 39(15), 3417-3424, ci-après référence **[1]**), ainsi que les travaux de Giraud et *al.* relatifs à des ensimages à base de particules d'un polyétherimide ou d'une polyéthercétonecétone, stabilisés par du dodécylsulfate de sodium, du dioctylsulfosuccinate de sodium ou du chlorure de benzalkonium (FR-A-2 960 878 ; Applied Surface Science 2013, 266, 94-99, ci-après références **[2]** et **[3]**).

Toutefois, il s'avère que les dispersions aqueuses de particules proposées par ces auteurs ne répondent pas aux exigences précédemment mentionnées.

Par contre, dans le cadre de leurs travaux, les Inventeurs ont constaté que la présence de micelles géantes dans des dispersions aqueuses de particules d'un ou de plusieurs polymères thermoplastiques permet de conférer à ces dispersions des propriétés rhéologiques telles qu'elles sont visqueuses au repos mais fluides sous cisaillement, ce qui leur permet :
- d'une part, de présenter une certaine stabilité en l'absence d'agitation tout en étant redispersables, après déstabilisation, par une simple agitation manuelle ou mécanique, et
- d'autre part, de s'étaler facilement sur la surface d'un substrat (telle que la surface de fibres de renfort) sous l'effet d'un cisaillement (tel que l'agitation à laquelle est soumis un bain d'ensimage) tout en étant capables de redevenir visqueuses après l'arrêt de ce cisaillement.

Ils ont également constaté que ces dispersions aqueuses peuvent être obtenues par un procédé d'émulsion/évaporation de solvant ou de dispersion/ évaporation de solvant, permettant auxdites dispersions aqueuses de comprendre des particules de polymère(s) thermoplastique(s) de très faible taille.

Et c'est sur ces constatations qu'est basée la présente invention.

Il est à noter que JP-A-2013-040374 divulgue l'utilisation de micelles géantes comme dispersant dans une dispersion aqueuse contenant des particules de métal, tandis que Roberta K. Rodrigues et al. (Journal of Colloid and Interface Science 2011, 364(2), 407-412) divulgue des micelles géantes d'un mélange d'acide salicylique et d'hexadécyltriméthylammonium.

### EXPOSÉ DE L'INVENTION

L'invention a donc, en premier lieu, pour objet l'utilisation de micelles géantes comme agent rhéofluidifiant et, notamment, comme agent stabilisant dans une dispersion aqueuse de particules d'au moins un polymère thermoplastique.

L'invention a également pour objet une dispersion aqueuse de particules d'au moins un polymère thermoplastique, laquelle est caractérisée en ce qu'elle comprend des micelles géantes qui sont situées autour des particules du ou des polymères thermoplastiques.

Dans le cadre de la présente invention, les termes « micelles géantes », doivent être pris au sens qu'il leur est donné dans la littérature, à savoir qu'il s'agit d'objets qui se présentent sous la forme de cylindres pouvant atteindre plusieurs microns de longueur pour un diamètre de quelques nanomètres et qui résultent de l'agrégation par auto-assemblage de molécules de tensioactifs en solution aqueuse. En solution, ces objets se comportent de façon analogue à des polymères. Toutefois, ils sont susceptibles de se briser et de se reformer de façon spontanée sous l'effet d'un cisaillement, ce qui leur a valu parfois le surnom de « polymères vivants ». Ces micelles, qui sont également connues sous le nom de micelles allongées (ou « worm-like micelles » en anglais) ont notamment été décrites par Cates et al. (Journal of Physics: Condensed Matter 1990, 2, 6869-6892, ci-après référence **[4]**), Hassan et al. (Current Science 2001, 80(8), 980-989, ci-après référence **[5]**) et par Walker (Current Opinion in Colloid & Interface Science 2001, 6, 451-456, ci-après référence **[6]**).

Conformément à l'invention, les micelles géantes comprennent, de préférence, des molécules d'un tensioactif cationique ou zwittérionique.

Comme tensioactif cationique, on peut notamment utiliser un sel choisi parmi :
- les sels d'alkyltriméthylammonium de formule (CₙH₂ₙ₊₁)N⁺(CH₃)₃,X⁻ (dans laquelle n est supérieur ou égal à 10 et X⁻ est un contre-ion inorganique ou organique) tels que le bromure de décyltriméthylammonium (ou C₁₀TAB), le bromure de dodécyltriméthylammonium (ou DTAB), le bromure de tétradécyltriméthylammonium (ou TTAB), le bromure d'hexadécyltriméthylammonium (ou CTAB, encore appelé bromure de cétyltriméthylammonium), le bromure d'octadécyltriméthylammonium (ou OTAB), le chlorure de décyltriméthylammonium (ou C₁₀TAC), le chlorure de dodécyltriméthylammonium (ou DTAC), le chlorure de tétradécyltriméthylammonium (ou TTAC), le chlorure d'hexadécyltriméthylammonium (ou CTAC, encore appelé chlorure de cétyltriméthylammonium), le chlorure d'octadécyltriméthylammonium (ou OTAC), le p-tosylate d'hexadécyltriméthylammonium (ou CTAT, encore appelé p-tosylate de cétyltriméthylammonium), le salicylate de tétradécyltriméthylammonium (ou C₁₄TASal), le salicylate d'hexadécyltriméthylammonium (ou C₁₆TASal, encore appelé salicylate de cétyltriméthylammonium) ou le 3-hydroxynaphtalène-2-carboxylate de cétyltriméthylammonium (ou CTAHNC) ;
- les sels d'alkyldiméthyléthylammonium de formule (CₙH₂ₙ₊₁)N⁺(CH₃)₂(C₂H₅),X⁻ (dans laquelle n est supérieur ou égal à 10 et X⁻ est un contre-ion inorganique ou organique) tels que le bromure d'hexadécyldiméthyléthylammonium (ou CDMEAB, encore appelé bromure de cétyldiméthyléthylammonium) ou le chlorure d'hexadécyldiméthyléthylammonium (ou CDMEAC, encore appelé chlorure de cétyldiméthyléthylammonium) ;
- les sels d'alkylpyridinium de formule (CₙH₂ₙ₊₁)C₅H₅NH⁺,X⁻ (dans laquelle n est supérieur ou égal à 10 et X⁻ est un contre-ion inorganique ou organique) tels que le bromure d'hexadécylpyridinium (ou DPB, encore appelé bromure de décylpyridinium), le chlorure d'hexadécylpyridinium (ou CPC, encore appelé chlorure de cétylpyridinium) ou le chlorate d'hexadécylpyridinium (ou CPClO₃, encore appelé chlorate de cétylpyridinium) ; et
- les sels de benzyldiméthylammonium tels que le chlorure de benzyldiméthyl(suif hydrogéné)ammonium (ou DMHTC).

Quant au tensioactif zwittérionique, il peut notamment être choisi parmi les bétaïnes à chaîne(s) grasse(s), typiquement en C₁₀ à C₂₆, telles que la bétaïne d'érucyldiméthylamidopropyle.

Selon une disposition préférée de l'invention, le tensioactif est un tensioactif cationique à groupe ammonium quaternaire, plus particulièrement un sel d'alkyltriméthylammonium tel que précédemment défini et, mieux encore, un sel d'hexadécyltriméthylammonium tel que le CTAB, le CTAC, le CTAT ou le C₁₆TASal, préférence étant donnée entre toutes au CTAC.

Comme connu en soi, la formation de micelles géantes par des tensioactifs nécessite, à quelques exceptions près, que soit ajouté à ces tensioactifs un sel, qui peut être inorganique (chlorure de sodium, bromure de sodium, bromure de potassium par exemple) ou organique (salicylate de sodium, phtalate de sodium par exemple), ou bien un acide organique comme l'acide salicylique, l'acide phtalique, l'acide chlorobenzoïque ou un acide hydroxynaphtoïque tel que l'acide 5-hydroxy-1-naphtoïque, l'acide 6-hydroxy-1-naphtoïque, l'acide 7-hydroxy-1-naphtoïque, l'acide 1-hydroxy-2-naphtoïque ou l'acide 3-hydroxy-2-naphtoïque.

Aussi, les micelles géantes comprennent-elles de plus, avantageusement, un sel inorganique ou organique ou un acide organique et, de préférence, de l'acide salicylique.

Conformément à l'invention, le ou les polymères thermoplastiques peuvent être choisis parmi tous les polymères thermoplastiques susceptibles d'être utilisés pour revêtir un substrat d'un film thermoplastique. Ainsi, ce ou ces polymères thermoplastiques peuvent notamment être choisis parmi les polyaryléthercétones (ou PAEK) telles que les polyéthercétones (ou PEK), les polyétheréthercétones (ou PEEK) ou les polyéthercétonecétones (ou PEKK), les polyéthylèneimines (ou PEthl), les polyétherimides (ou PEI), les polyimides (ou PI), les polyoléfines telles que les polyéthylènes, notamment de haute densité, les polypropylènes ou les copolymères d'éthylène et de polypropylène, les polyamides tels que les polyamides 6 (ou PA-6), 1.1 (ou PA-1.1), 12 (ou PA-12), 6.6 (ou PA-6.6), 4.6 (ou PA-4.6), 6.10 (ou PA-6.10), 6.12 (ou PA-6.12) ou les polyamides aromatiques, en particulier les polyphtalamides ou les aramides, les polyuréthannes thermoplastiques (ou TPU), les poly(sulfure de phénylène) (ou PPS), les poly(téréphtalate d'éthylène) (ou PET), les poly(téréphtalate de butylène) (ou PBT), les polysulfones telles que les polysulfones proprement dites (ou PSU), les polyéthersulfones (ou PES) ou les polyphénylsulfones (ou PPSU), les polycarbonates, les poly(chlorure de vinyle), les poly(alcool vinylique) et les mélanges de ces polymères.

Pour l'ensimage de fibres de renfort en vue de la fabrication de pièces en matériaux composites et, notamment, de pièces de structure pour les industries aéronautique et spatiale, le ou les polymères thermoplastiques sont, de préférence, choisis parmi les polymères thermoplastiques thermostables, c'est-à-dire en pratique parmi les polyaryléthercétones, les polyétherimides et les polysulfones.

Auquel cas, les micelles géantes sont, de préférence, formées d'un mélange de molécules de CTAC et d'acide salicylique, les Inventeurs ayant, en effet, mis en évidence par des analyses thermogravimétriques, que le CTAC est dégradé à 75% massiques à 150°C tandis que l'acide salicylique est totalement dégradé à 180°C, soit des températures qui sont inférieures à la température de dégradation que présentent typiquement ces polymères thermoplastiques. Il est ainsi possible de réaliser le séchage des fibres de renfort au sortir du bain d'ensimage à une température permettant d'éliminer les ¾ massiques du CTAC et la totalité de l'acide salicylique sans affecter la structure du ou des polymères thermoplastiques. En outre, les 25% massiques de CTAC, qui ne sont pas dégradés, correspondent à un résidu d'amine tertiaire qui n'est pas susceptible de perturber la qualité de l'ensimage des fibres de renfort ou leur mise en oeuvre ultérieure pour la fabrication de pièces en matériaux composites.

Ce mélange de CTAC et d'acide salicylique, qui est préférentiellement un mélange équimolaire, est avantageusement présent dans la dispersion aqueuse à une concentration allant de 5 mmol/L à 100 mmol/L et, de préférence, de 40 mmol/L à 50 mmol/L.

Dans tous les cas, la teneur massique de la dispersion aqueuse en particules du ou des polymères thermoplastiques, rapportée à la masse totale de cette dispersion, va de 0,1% à 3%, de préférence entre 0,1% et 1% et, mieux encore, de 0,4% à 0,6%.

Comme précédemment mentionné, la dispersion aqueuse peut être obtenue par un procédé d'émulsion/évaporation de solvant ou de dispersion/évaporation de solvant.

Aussi, l'invention a-t-elle aussi pour objet un procédé de préparation d'une dispersion aqueuse de particules d'au moins un polymère thermoplastique telle que précédemment définie, qui est caractérisé en ce qu'il comprend :
a) la mise en contact, sous agitation, d'une phase organique comprenant le ou les polymères thermoplastiques dissous ou dispersés dans un solvant organique, non miscible à l'eau, avec une phase aqueuse comprenant des micelles géantes ; et
b) l'évaporation du solvant organique ;
moyennant quoi on obtient le transfert sous la forme de particules du ou des polymères thermoplastiques de la phase organique vers la phase aqueuse.

De manière préférée, les étapes a) et b) sont réalisées simultanément, le solvant organique étant avantageusement un solvant volatil à température ambiante (chloroforme, dichlorométhane, dichloroéthane, acétate d'éthyle, formate d'éthyle, cyclohexane, éther diéthylique ou mélange de ceux-ci par exemple) de sorte à pouvoir être évaporé uniquement sous l'effet de l'agitation à laquelle sont soumises les phases organique et aqueuse lors de leur mise en contact.

En pratique, ce procédé est avantageusement mis en oeuvre en ajoutant goutte à goutte la phase organique comprenant le ou les polymères thermoplastiques dissous ou dispersés dans le solvant organique à une solution aqueuse comprenant les éléments nécessaires à la formation de micelles géantes (à savoir un tensioactif qui, est, de préférence, un tensioactif cationique ou zwittérionique ainsi qu'éventuellement un sel inorganique ou organique ou un acide organique), et ce, sous une forte agitation, (typiquement supérieure à 10 000 tr/min si on utilise un dispositif d'agitation du type Ultra-Turrax™), et en maintenant cette agitation jusqu'à évaporation complète du solvant organique.

L'invention a encore pour objet l'utilisation d'une dispersion aqueuse de particules d'au moins un polymère thermoplastique telle que précédemment définie pour revêtir au moins un substrat d'un film thermoplastique et, en particulier, pour l'ensimage de fibres de renfort pour matériaux composites à matrice thermoplastique.

Conformément à l'invention, les fibres de renfort peuvent être choisies parmi toutes les fibres susceptibles d'être utilisées comme renfort dans la fabrication de pièces en matériaux composites. Ainsi, il peut notamment s'agir de fibres de verre, de fibres de quartz, de fibres de carbone, de fibres de graphite, de fibres de silice, de fibres métalliques comme des fibres d'acier, des fibres d'aluminium ou des fibres de bore, de fibres céramiques comme des fibres de carbure de silicium ou de carbure de bore, de fibres organiques de synthèse comme des fibres d'aramide, des fibres de polyéthylène, des fibres de polyester ou des fibres de poly(*p*-phénylène benzobisoxazole), plus connues sous le sigle PBO, de fibres organiques naturelles comme des fibres de chanvre, des fibres de lin ou des fibres de soie, ou encore de mélanges de telles fibres.

Les fibres de renfort se présentent, de préférence, sous la forme de fils regroupant plusieurs milliers de filaments élémentaires (typiquement de 3000 à 48000) mesurant, par exemple, 6 à 10 µm de diamètre dans le cas de fibres de carbone. Ce type de fibres sont connues sous les dénominations anglaises « rovings » ou « tapes ».

Par ailleurs, l'ensimage des fibres de renfort comprend, de préférence, l'immersion de ces fibres de renfort dans la dispersion aqueuse puis leur séchage. En variante, toutefois, il peut également être réalisé par pulvérisation de la dispersion aqueuse sur les fibres de renfort puis séchage de ces fibres.

D'autres caractéristiques et avantages de l'invention apparaîtront mieux à la lecture du complément de description qui suit, qui se rapporte à des exemples de préparation de dispersions aqueuses conformes à l'invention et de démonstration de leurs propriétés, et qui est donné en référence aux figures annexées.

Bien entendu, ce complément de description n'est donné qu'à titre d'illustration de l'objet de l'invention et ne constitue en aucun cas une limitation de cet objet.

### BRÈVE DESCRIPTION DES FIGURES

La figure 1 illustre l'évolution de la stabilité d'une première dispersion aqueuse conforme à l'invention, telle que déterminée par diffusion multiple de la lumière sur une période de 50 heures, cette première dispersion aqueuse étant une dispersion de particules d'un polyétherimide.
La figure 2 illustre les rhéogrammes de ladite première dispersion aqueuse tels qu'établis deux fois, d'une part, le jour de sa préparation (symboles ▲ et △) et, d'autre part, après 7 jours de repos et redispersion par simple agitation manuelle (symboles ● et ○).
La figure 3 est une image prise au microscope électronique en transmission (MET) de ladite première dispersion aqueuse.
La figure 4 est une image prise au microscope électronique à balayage (MEB) d'un film obtenu par dépôt de ladite première dispersion aqueuse sur une plaque de graphite et séchage de cette plaque.
La figure 5 est un schéma illustrant le dispositif d'ensimage ayant été utilisé pour ensimer des fibres de carbone avec ladite première dispersion aqueuse.
Les figures 6A et 6B sont des images prises au MEB de filaments d'une fibre de carbone ayant été ensimée avec ladite première dispersion aqueuse au moyen du dispositif montré sur la figure 5 et en utilisant une vitesse de défilement de 10 m/minute.
Les figures 7A et 7B sont des images prises au MEB de filaments d'une fibre de carbone ayant été ensimée avec ladite première dispersion aqueuse au moyen du dispositif montré sur la figure 5 et en utilisant une vitesse de défilement de 15 m/minute.
Les figures 8A et 8B sont des images prises au MEB de filaments d'une fibre de carbone n'ayant pas été ensimée, ces images étant données à titre de comparaison.
La figure 9 est une image prise au MEB d'un film formé par dépôt d'une deuxième dispersion aqueuse conforme à l'invention sur une plaque de graphite et séchage de cette plaque, cette deuxième dispersion aqueuse étant une dispersion de particules d'une polyéthersulfone.
La figure 10 est une image prise au MEB d'un film formé par dépôt d'une troisième dispersion aqueuse conforme à l'invention sur une plaque de graphite et séchage de cette plaque, cette troisième dispersion aqueuse étant une dispersion de particules d'une polysulfone.

### EXPOSÉ DÉTAILLÉ DE MODES DE RÉALISATION PARTICULIERS

### EXEMPLE I : Dispersion aqueuse de particules d'un polyétherimide :

### I.1 - Préparation de la dispersion :

On prépare une dispersion aqueuse de particules d'un polyétherimide (résine PEI Ultem™ 1000 - GE Plastics), dénommée ci-après dispersion 1, par émulsion/évaporation. Ce PEI a une température de transition vitreuse de 217°C.

Pour ce faire, on dissout 0,71 g de la résine PEI dans 13,6 mL de dichlorométhane sous agitation magnétique.

Parallèlement, on dissout, également sous agitation magnétique, 1,868 g de chlorure de cétyltriméthylammonium (CTAC) dans 136,4 mL d'eau distillée (soit une concentration en CTAC de 4,11.10⁻² mol/L) puis on ajoute, à la solution ainsi obtenue, 0,805 g d'acide salicylique (soit une concentration en acide salicylique également de 4,11.10⁻² mol/L).

La solution organique de résine est ajoutée goutte à goutte à la solution aqueuse de CTAC/acide salicylique sous agitation à l'Ultra-Turrax™ - IKA. L'ajout dure environ 5 minutes. L'agitation est fixée à 12 000 tr/mn et est maintenue jusqu'à évaporation complète du dichlorométhane, soit pendant environ 30 minutes.

On obtient ainsi une dispersion aqueuse à 0,51% massique de particules de PEI.

### I.2 - Propriétés de la dispersion :

### * Taille des particules :

Le diamètre moyen et l'indice de polydispersité des particules de la dispersion **1** sont déterminés au moyen d'un appareil de diffusion dynamique de la lumière Zetasizer Nano S - MALVERN Instruments, en utilisant un laser de haute puissance (50 mW) émettant à la longueur d'onde de 532 nm et en réalisant la collecte du signal lumineux diffusé par l'échantillon à analyser en rétrodiffusion (angle de 173°). La mesure est réalisée à 25°C.

Le diamètre moyen en intensité des particules est de 209 nm.

Leur indice de polydispersité est de 0,265.

### * Stabilité de la dispersion :

La stabilité de la dispersion **1** est appréciée au moyen d'un appareil Turbiscan™ LAB- FORMULACTION qui permet de caractériser précisément et rapidement la stabilité d'une dispersion liquide par diffusion multiple de la lumière (MLS).

La diffusion multiple de la lumière est un procédé bien connu qui consiste à envoyer des photons (λ_{émission} = 880 nm) dans l'échantillon à analyser. Ces photons, après avoir été diffusés de multiples fois par les particules de la dispersion, sortent de l'échantillon et sont détectés par deux 2 détecteurs, l'un en transmission, l'autre en rétrodiffusion (angle de 135°). L'analyse est réalisée à 25°C.

L'intensité de la rétrodiffusion est directement reliée à la longueur de transport des photons. Aussi, cette intensité dépend-t-elle de la taille et de la concentration des particules.

Un suivi de la différence entre l'intensité de la lumière rétrodiffusée à l'instant t0 et à l'instant t (Rₜ₀ - Rₜ) est réalisé pendant plusieurs jours avec un intervalle de 3 heures entre chaque mesure.

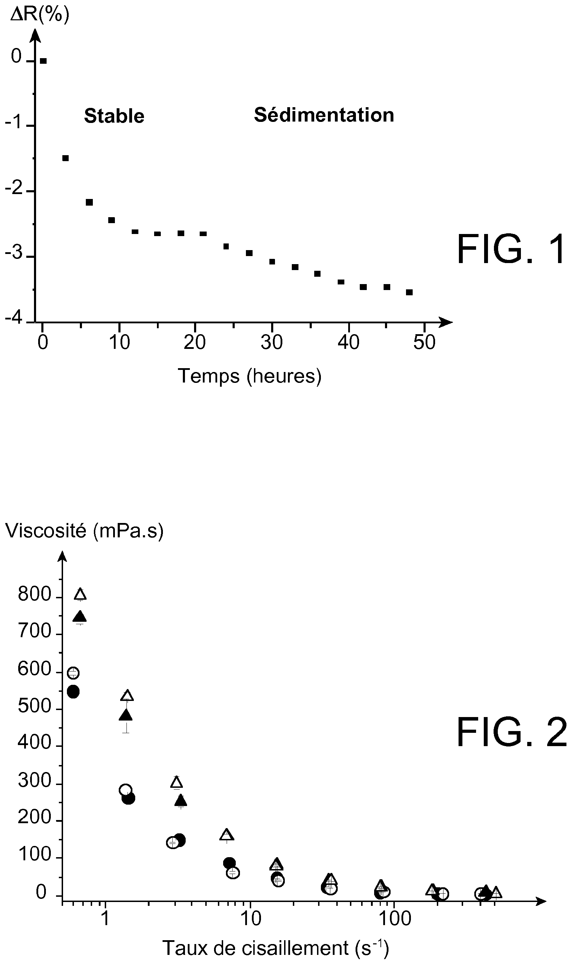

La figure 1 illustre, sous la forme d'une courbe, l'évolution de la variation de l'intensité de la rétrodiffusion rapportée à l'intensité de la rétrodiffusion au temps t0 (soit (Rₜ₀ - Rₜ)/Rₜ₀), notée ΔR et exprimée en pourcentages, telle qu'obtenue pour la dispersion **1** sur une période de 50 heures.

Comme le montre cette figure, la courbe présente une modification de pente, caractéristique d'un début de sédimentation des particules à partir de 22 heures. La dispersion **1** commence donc à se déstabiliser seulement au bout de 22 heures.

### * Analyse rhéologique de la dispersion :

La rhéologie de la dispersion **1** est appréciée par des tests qui consistent à mesurer la viscosité de cette dispersion en lui appliquant un taux de cisaillement allant de 0,6 s⁻¹ à 500 s⁻¹, et ce, d'une part, le jour de sa préparation et, d'autre part, après 7 jours de repos et redispersion par simple agitation manuelle. Chaque test est réalisé deux fois.

La figure 2 illustre les rhéogrammes ainsi obtenus, la viscosité étant exprimée en mPa.s et le taux de cisaillement en s⁻¹. Sur cette figure, les symboles ▲ et △ correspondent aux rhéogrammes obtenus le jour de la préparation de la dispersion 1 tandis que les symboles ● et ○ correspondent aux rhéogrammes obtenus après les 7 jours de repos de cette dispersion.

Comme le montre la figure 2, la dispersion **1** présente, le jour de sa préparation, une viscosité de l'ordre de 800 mPa.s sans cisaillement et sa viscosité chute à 500 mPa.s dès l'application d'un taux de cisaillement de 1 s⁻¹.

Elle montre également qu'il suffit d'une simple agitation manuelle pour que la dispersion **1** retrouve, après 7 jours de repos, une viscosité proche de celle qu'elle présente le jour de sa préparation.

### * Analyse microscopique :

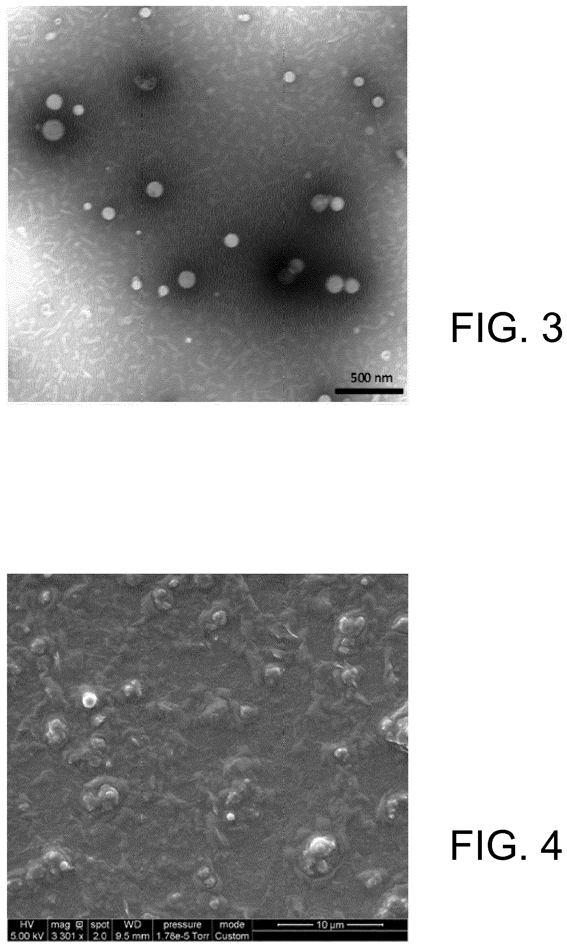

Comme le montre la figure 3, qui correspond à une image prise au MET de la dispersion **1**, cette dispersion comprend des particules sphériques (présents sur l'image sous la forme de ronds blancs) qui présentent un diamètre maximum de 200 nm, enserrées au milieu de micelles cylindriques.

La distribution en taille de ces particules est polydisperse (la taille des particules allant de 20 nm à 200 nm) en accord avec les résultats obtenus par diffusion dynamique de la lumière.

### * Propriétés filmogènes :

L'aptitude de la dispersion **1** à former un film sur un substrat est tout d'abord testée en déposant une goutte de cette dispersion sur une plaque de graphite à l'aide d'une pipette Pasteur, en étalant cette goutte puis en plaçant la plaque dans une étuve à 100°C pour sécher ce dépôt.

Comme visible sur la figure 4, qui correspond à une image prise au MEB de la plaque de graphite après séchage du dépôt, le film obtenu est homogène et montre une bonne coalescence des particules de PEI.

Par ailleurs, l'aptitude de la dispersion **1** à former un film sur un substrat est également testée en ensimant des fibres de carbone multifilamentaires (fibres IM7 à 12 000 filaments - HEXCEL) avec cette dispersion.

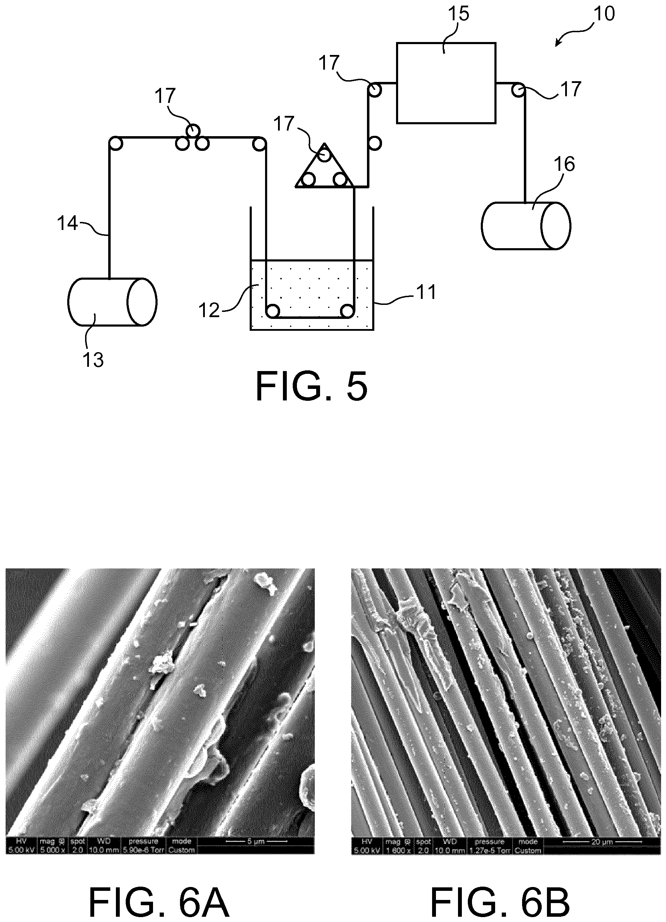

Cet ensimage est réalisé en utilisant le dispositif 10 qui est illustré schématiquement sur la figure 5 et qui comprend :
- un bac 11 que l'on remplit d'un bain d'ensimage 12 (ici, la dispersion **1**) ;
- une bobine 13 qui est située en amont (dans le sens de défilement des fibres de carbone dans le dispositif 10) du bac 11 et sur laquelle sont enroulées les fibres de carbone 14 avant leur introduction dans le bain d'ensimage ;
- une étuve 15 qui est située en aval du bac 11 et qui permet de sécher les fibres de carbone à leur sortie du bain d'ensimage ;
- une bobine 16 qui est situé en aval de l'étuve 15 et sur laquelle sont enroulées les fibres de carbone à leur sortie de cette étuve ; et
- un système d'entraînement comprenant notamment un jeu de poulies 17 et assurant le défilement des mèches de fibres de renfort depuis la bobine 13 jusqu'à la bobine 16.

La température de l'étuve est fixée à 200°C de sorte à ce qu'elle soit inférieure à la température de transition vitreuse du PEI.

Deux vitesses de défilement des fibres de carbone dans le dispositif 10 sont utilisées : 10 m/min d'une part, et 15 m/min d'autre part.

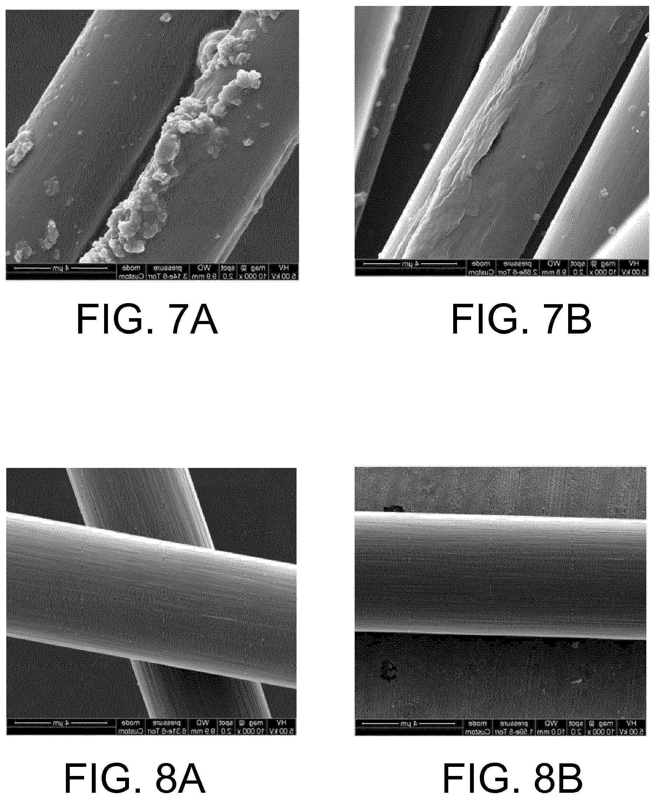

Les résultats sont illustrés sur les figures 6A, 6B, 7A, 7B, 8A et 8B qui correspondent à des images prises au MEB :
- de filaments d'une fibre de carbone ayant été ensimée à la vitesse de défilement de 10 m/min (figures 6A et 6B) ;
- de filaments d'une fibre de carbone ayant été ensimée à la vitesse de défilement de 15 m/min (figures 7A et 7B) ; et à titre de comparaison
- de filaments d'une fibre de carbone n'ayant pas été ensimée (figures 8A et 8B).

Ces images montrent qu'un ensimage de fibres de carbone multifilamentaires avec la dispersion **1** conduit à la formation sur les filaments de ces fibres d'un film homogène, avec une très bonne coalescence des particules de PEI présentes dans cette dispersion.

### EXEMPLE II : Dispersion aqueuse de particules d'une polyéthersulfone :

### II.1 - Préparation de la dispersion :

On prépare une dispersion aqueuse de particules d'une polyéthersulfone (PES 4100 P - SUMIMOTO Chemical), dénommée ci-après dispersion **2**, en procédant comme décrit au point I.1 ci-avant, à ceci près que l'on remplace le PEI par la PES, qui forme une dispersion stable dans le solvant organique. Cette PES a une température de transition vitreuse de 225°C.

### II.2 - Propriétés de la dispersion :

La dispersion **2** présente :
- des particules dont le diamètre moyen en intensité et l'indice de polydispersité, tels que déterminés par diffusion dynamique de la lumière, sont respectivement de 158 nm et de 0,210 ;
- une stabilité, telle qu'appréciée par observation visuelle, de 10 à 12 heures.

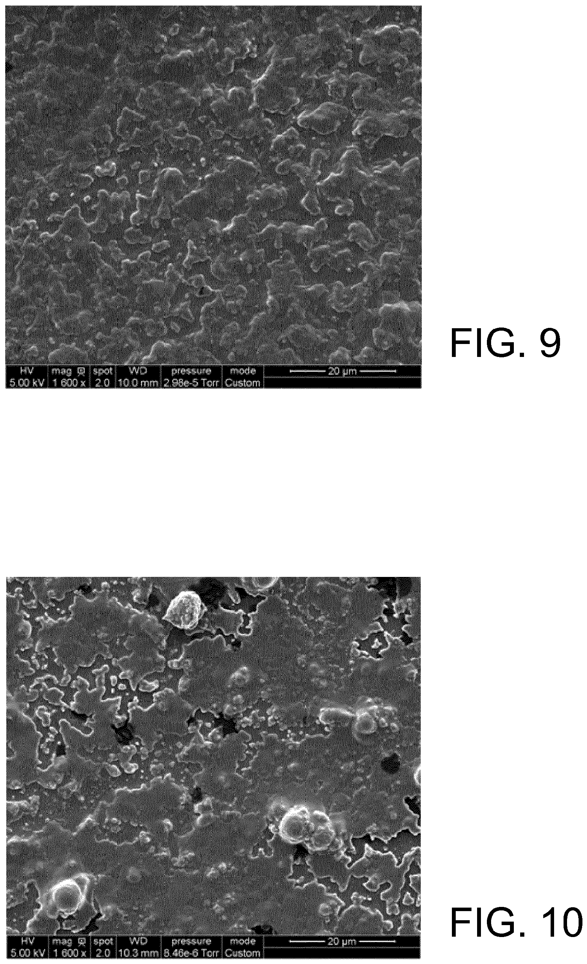

Par ailleurs, comme le montre la figure 9, qui correspond à une image prise au MEB d'une plaque de graphite traitée avec une goutte de la dispersion **2** comme décrit au point I.2 ci-avant, cette dispersion permet de former un film homogène de PES sur la surface d'un substrat.

### EXEMPLE III : Dispersion aqueuse de particules d'une polysulfone :

### III.1 - Préparation de la dispersion :

On prépare une dispersion aqueuse de particules d'une polysulfone (PSU Ultrason™ S 2010 Naturel - BASF), dénommée ci-après dispersion 3, en procédant comme décrit au point I.1 ci-avant, à ceci près que l'on remplace le PEI par la PSU. Cette PSU a une température de transition vitreuse de 187°C.

### III.2 - Propriétés de la dispersion :

La dispersion **3** présente :
- des particules dont le diamètre moyen en intensité et l'indice de polydispersité, tels que déterminés par diffusion dynamique de la lumière, sont respectivement de 178 nm et de 0,297 ;
- une stabilité, telle qu'appréciée par observation visuelle, de 10 à 12 heures.

Par ailleurs, comme le montre la figure 10, qui correspond à une image prise au MEB d'une plaque de graphite ayant été traitée avec une goutte de la dispersion **3** comme décrit au point I.2 ci-avant, cette dispersion permet également de former un film homogène de PSU sur la surface d'un substrat.

### RÉFÉRENCES CITÉES

**[1]** Broyles et al., Polymer 1998, 39(15), 3417-3424
**[2]** FR-A-2 960 878 ;
**[3]** Giraud et al., Applied Surface Science 2013, 266, 94-99
**[4]** Cates et al., Journal of Physics: Condensed Matter 1990, 2, 6869-6892
**[5]** Hassan et al., Current Science 2001, 80(8), 980-989
**[6]** Walker, Current Opinion in Colloid & Interface Science 2001, 6, 451-456

## Revendications

1. Utilisation de micelles géantes comme agent rhéofluidifiant dans une dispersion aqueuse de particules d'au moins un polymère thermoplastique.

2. Dispersion aqueuse de particules d'au moins un polymère thermoplastique, **caractérisée en ce qu'**elle comprend des micelles géantes qui sont situées autour des particules du ou des polymères thermoplastiques.

3. Utilisation selon la revendication 1 ou dispersion aqueuse selon la revendication 2, **caractérisée en ce que** les micelles géantes comprennent des molécules d'un tensioactif cationique ou zwittérionique.

4. Utilisation ou dispersion aqueuse selon la revendication 3, **caractérisée en ce que** le tensioactif est un tensioactif cationique à groupe ammonium quaternaire, de préférence un sel d'alkyltriméthylammonium de formule (CₙH₂ₙ₊₁)N⁺(CH₃)₃,X⁻, dans laquelle n est supérieur ou égal à 10 et X⁻ est un contre-ion inorganique ou organique, et, mieux encore, un sel d'hexadécyltriméthylammonium.

5. Utilisation ou dispersion aqueuse selon la revendication 4, **caractérisée en ce que** le sel d'hexadécyltriméthylammonium est le chlorure d'hexadécyltriméthylammonium.

6. Utilisation ou dispersion aqueuse selon l'une quelconque des revendications 3 à 5, **caractérisée en ce que** les micelles géantes comprennent de plus un sel inorganique ou organique ou un acide organique.

7. Utilisation ou dispersion aqueuse selon la revendication 6, **caractérisée en ce que** l'acide organique est l'acide salicylique.

8. Utilisation selon l'une quelconque des revendications 1 à 7 ou dispersion aqueuse selon l'une quelconque des revendications 2 à 7, **caractérisée en ce que** le ou les polymères thermoplastiques sont choisis parmi les polyaryléthercétones, les polyéthylèneimines, les polyoléfines, les polyamides, les polyimides, les polyuréthannes thermoplastiques, les polysulfures de phénylène, les polytéréphtalates d'éthylène ou de butylène, les polysulfones, les polycarbonates, les polychlorures de vinyle et leurs mélanges.

9. Utilisation ou dispersion aqueuse selon la revendication 8, **caractérisée en ce que** le ou les polymères thermoplastiques sont choisis parmi les polyaryléthercétones, les polyétherimides et les polysulfones.

10. Utilisation ou dispersion aqueuse selon la revendication 9, **caractérisée en ce que** les micelles géantes sont formées d'un mélange de molécules de chlorure d'hexadécyltriméthylammonium et d'acide salicylique, de préférence équimolaire.

11. Utilisation ou dispersion aqueuse selon la revendication 10, **caractérisée en ce que** la concentration du mélange dans la dispersion aqueuse va de 5 mmol/L à 100 mmol/L et, de préférence, de 40 mmol/L à 50 mmol/L.

12. Utilisation selon l'une quelconque des revendications 1 à 11 ou dispersion aqueuse selon l'une quelconque des revendications 2 à 11, **caractérisée en ce que** la teneur massique de la dispersion aqueuse en particules du ou des polymères thermoplastiques va de 0,1% à 1% et, de préférence, de 0,4% à 0,6% par rapport à la masse totale de la dispersion aqueuse.

13. Procédé de préparation d'une dispersion aqueuse de particules d'au moins un polymère thermoplastique telle que définie dans l'une quelconque des revendications 2 à 12, **caractérisé en ce qu'**il comprend :
a) la mise en contact, sous agitation, d'une phase organique comprenant le ou les polymères thermoplastiques dissous ou dispersés dans un solvant organique, non miscible à l'eau, avec une phase aqueuse comprenant des micelles géantes ; et
b) l'évaporation du solvant organique ;
moyennant quoi on obtient le transfert sous la forme de particules du ou des polymères thermoplastiques de la phase organique vers la phase aqueuse.

14. Procédé selon la revendication 13, **caractérisé en ce que** les étapes a) et b) sont réalisées simultanément.

15. Utilisation d'une dispersion aqueuse de particules d'au moins un polymère thermoplastique telle que définie dans l'une quelconque des revendications 2 à 12, pour revêtir au moins un substrat d'un film thermoplastique.

16. Utilisation selon la revendication 15, pour l'ensimage de fibres de renfort pour matériaux composites à matrice thermoplastique.

17. Utilisation selon la revendication 16, **caractérisée en ce que** les fibres de renfort sont choisies parmi les fibres de verre, les fibres de carbone, les fibres de graphite, les fibres de silice, les fibres métalliques, les fibres céramiques, les fibres organiques de synthèse, les fibres organiques naturelles et leurs mélanges et, de préférence, parmi les fibres de carbone.

18. Utilisation selon la revendication 16 ou la revendication 17, **caractérisée en ce que** l'ensimage des fibres de renfort comprend l'immersion des fibres de renfort dans la dispersion aqueuse puis le séchage des fibres de renfort.

## Patentansprüche

1. Verwendung von Riesenmizellen als Rheofluidisierungsmittel in einer wässrigen Dispersion von Partikeln wenigstens eines thermoplastischen Polymers.

2. Wässrige Dispersion von Partikeln wenigstens eines thermoplastischen Polymers, **dadurch gekennzeichnet, dass** sie Riesenmizellen umfasst, die um die Partikel des oder der thermoplastischen Polymere herum angeordnet sind.

3. Verwendung nach Anspruch 1 oder wässrige Dispersion nach Anspruch 2,
**dadurch gekennzeichnet, dass** die Riesenmizellen Moleküle eines kationischen oder zwitterionischen Tensids umfassen.

4. Verwendung oder wässrige Dispersion nach Anspruch 3,
**dadurch gekennzeichnet, dass** das Tensid ein kationisches Tensid mit einer quartären Ammoniumgruppe, bevorzugt ein Alkyltrimethylammoniumsalz der Formel (CₙH₂ₙ₊₁)N⁺(CH₃)₃,X⁻ ist, wobei n größer oder gleich 10 ist und X⁻ ein anorganisches oder organisches Gegenion und vorzugsweise ein Hexadecyltrimethylammoniumsalz ist.

5. Verwendung oder wässrige Dispersion nach Anspruch 4,
**dadurch gekennzeichnet, dass** das Hexadecyltrimethylammoniumsalz Hexadecyltrimethylammoniumchlorid ist.

6. Verwendung oder wässrige Dispersion nach einem der Ansprüche 3 bis 5, **dadurch gekennzeichnet, dass** die Riesenmizellen ferner ein anorganisches oder organisches Salz oder eine organische Säure umfassen.

7. Verwendung oder wässrige Dispersion nach Anspruch 6, **dadurch gekennzeichnet, dass** die organische Säure Salicylsäure ist.

8. Verwendung nach einem der Ansprüche 1 bis 7 oder wässrige Dispersion nach einem der Ansprüche 2 bis 7, **dadurch gekennzeichnet, dass** das oder die thermoplastischen Polymere gewählt sind aus Polyaryletherketonen, Polyethyleniminen, Polyolefinen, Polyamiden, Polyimiden, thermoplastischen Polyurethanen, Phenylenpolysulfiden, Ethylen- oder Butylenpolyterephthalaten, Polysulfonen, Polycarbonaten, Polyvinylchloriden und deren Mischungen.

9. Verwendung oder wässrige Dispersion nach Anspruch 8, **dadurch gekennzeichnet, dass** das oder die thermoplastischen Polymere gewählt sind aus Polyaryletherketonen, Polyetherimiden und Polysulfonen.

10. Verwendung oder wässrige Dispersion nach Anspruch 9, **dadurch gekennzeichnet, dass** die Riesenmizellen aus einer Mischung von Hexadecyltrimethylammoniumchlorid und Salicylsäuremolekülen, bevorzugt äquimolar, gebildet sind.

11. Verwendung oder wässrige Dispersion nach Anspruch 10, **dadurch gekennzeichnet, dass** die Konzentration der Mischung in der wässrigen Dispersion im Bereich von 5 mmol/L bis 100 mmol/L und bevorzugt von 40 mmol/L bis 50 mmol/L liegt.

12. Verwendung nach einem der Ansprüche 1 bis 11 oder wässrige Dispersion nach einem der Ansprüche 2 bis 11, **dadurch gekennzeichnet, dass** der Partikelmassengehalt der wässrigen Dispersion des oder der thermoplastischen Polymers im Bereich von 0,1% bis 1% und bevorzugt von 0,4% bis 0,6%, bezogen auf die Gesamtmasse der wässrigen Dispersion, liegt.

13. Verfahren zur Herstellung einer wässrigen Dispersion von Partikeln wenigstens eines thermoplastischen Polymers nach einem der Ansprüche 2 bis 12, **dadurch gekennzeichnet, dass** es umfasst:
a) Inkontaktbringen unter Rühren einer organischen Phase, die das oder die thermoplastischen Polymere umfasst, die in einem mit Wasser nicht mischbaren organischen Lösungsmittel gelöst oder dispergiert sind, mit einer wässrigen Phase, die Riesenmizellen umfasst; und
b) Verdampfen des organischen Lösungsmittels;
wodurch der Transfer der organischen Phase zur wässrigen Phase in Form von Partikeln des oder der thermoplastischen Polymere erzielt wird.

14. Verfahren nach Anspruch 13, **dadurch gekennzeichnet, dass** die Schritte a) und b) gleichzeitig durchgeführt werden.

15. Verwendung einer wässrigen Dispersion von Partikeln wenigstens eines thermoplastischen Polymers, wie in einem der Ansprüche 2 bis 12 definiert, zum Beschichten mindestens eines Substrats mit einer thermoplastischen Folie.

16. Verwendung nach Anspruch 15 zum Schmälzen von Verstärkungsfasern für thermoplastische Matrix-Verbundwerkstoffe.

17. Verwendung nach Anspruch 16, **dadurch gekennzeichnet, dass** die Verstärkungsfasern gewählt sind aus Glasfasern, Kohlenstoffasern, Graphitfasern, Siliziumdioxidfasern, Metallfasern, Keramikfasern, synthetischen organischen Fasern, natürlichen organischen Fasern und deren Mischungen und bevorzugt aus Kohlenstoffasern.

18. Verwendung nach Anspruch 16 oder Anspruch 17, **dadurch gekennzeichnet, dass** das Schmälzen der Verstärkungsfasern das Eintauchen der Verstärkungsfasern in die wässrige Dispersion und anschließend das Trocknen der Verstärkungsfasern umfasst.

## Claims

1. Use of giant micelles as shear-thinning agent in an aqueous dispersion of particles of at least one thermoplastic polymer.

2. Aqueous dispersion of particles of at least one thermoplastic polymer, **characterised in that** it comprises giant micelles which are located around the particles of the thermoplastic polymer(s).

3. Use according to claim 1 or aqueous dispersion according to claim 2, **characterised in that** the giant micelles comprise molecules of a cationic or zwitterionic surfactant.

4. Use or aqueous dispersion according to claim 3, **characterised in that** the surfactant is a cationic surfactant with a quaternary ammonium group, preferably an alkyltrimethylammonium salt of formula (CₙH₂ₙ₊₁)N⁺(CH₃)₃,X⁻, wherein n is greater than or equal to 10 and X⁻ is an inorganic or organic counterion, and, better still, a hexadecyltrimethylammonium salt.

5. Use or aqueous dispersion according to claim 4, **characterised in that** the hexadecyltrimethylammonium salt is hexadecyltrimethylammonium chloride.

6. Use or aqueous dispersion according to any of claims 3 to 5, **characterised in that** the giant micelles comprise in addition an inorganic or organic salt or an organic acid.

7. Use or aqueous dispersion according to claim 6, **characterised in that** the organic acid is salicylic acid.

8. Use according to any of claims 1 to 7 or aqueous dispersion according to any of claims 2 to 7, **characterised in that** the thermoplastic polymer(s) is (are) selected from polyaryletherketones, polyethyleneimines, polyolefins, polyamides, polyimides, thermoplastic polyurethanes, polyphenylene sulphides, polyethylene or polybutylene terephthalates, polysulphones, polycarbonates, polyvinyl chlorides and mixtures thereof.

9. Use or aqueous dispersion according to claim 8, **characterised in that** the thermoplastic polymer(s) is (are) selected from polyaryletherketones, polyetherimides and polysulphones.

10. Use or aqueous dispersion according to claim 9, **characterised in that** the giant micelles are formed of a mixture of molecules of hexadecyltrimethylammonium chloride and salicylic acid, preferably equimolar.

11. Use or aqueous dispersion according to claim 10, **characterised in that** the concentration of the mixture in the aqueous dispersion ranges from 5 mmol/L to 100 mmol/L and, preferably, from 40 mmol/L to 50 mmol/L.

12. Use according to any of claims 1 to 11 or aqueous dispersion according to any of claims 2 to 11, **characterised in that** the weight content of the aqueous dispersion in particles of the thermoplastic polymer(s) ranges from 0.1% to 1% and, preferably, from 0.4% to 0.6% with respect to the total weight of the aqueous dispersion.

13. Method for preparing an aqueous dispersion of particles of at least one thermoplastic polymer as defined in any of claims 2 to 12, **characterised in that** it comprises:
a) bringing into contact, under stirring, an organic phase comprising the thermoplastic polymer(s) dissolved or dispersed in an organic solvent, non-miscible with water, with an aqueous phase comprising giant micelles; and
b) evaporating the organic solvent;
whereby the thermoplastic polymer(s) is (are) transferred in the form of particles from the organic phase to the aqueous phase.

14. Method according to claim 13, **characterised in that** steps a) and b) are carried out simultaneously.

15. Use of an aqueous dispersion of particles of at least one thermoplastic polymer as defined in any of claims 2 to 12 to coat at least one substrate with a thermoplastic film.

16. Use according to claim 15 for the sizing of reinforcing fibres for thermoplastic matrix composite materials.

17. Use according to claim 16, **characterised in that** the reinforcing fibres are selected from glass fibres, carbon fibres, graphite fibres, silica fibres, metal fibres, ceramic fibres, synthetic organic fibres, natural organic fibres and mixtures thereof and, preferably, from carbon fibres.

18. Use according to claim 16 or claim 17, **characterised in that** the sizing of the reinforcing fibres comprises the immersion of the reinforcing fibres in the aqueous dispersion then the drying of the reinforcing fibres.
